# EUROPEAN PATENT APPLICATION

(11) **EP 1 726 353 A1**
(43) Date of publication of application: **29.11.2006**
(21) Application number: 05011400.8
(22) Date of filing: 25.05.2005
(51) Int. Cl.: B01D 65/02, B01D 61/58

(54) **Membrane filtration of a product**

(71) Applicant: Johnson Diversey, Inc., Sturtevant, Wisconsin 53177 (US)
(72) Inventor: Flemming, Skou, 2720 Vanlöse (DK)
(74) Representative: Hörschler, Wolfram Johannes

(57) **Abstract**

The invention refers to a method for membrane filtration of a product in a membrane plant (1), containing the phases
A) filtering the product with a first membrane system (2) of the membrane plant (1),
B) cleaning the first membrane system (2) by a multi-step cleaning procedure including at least one rinsing-step with water and at least one cleaning step with a cleaning solution, resulting in at least one contaminated cleaning solution,
C) filtering the at least one contaminated cleaning solution with a second membrane system (9), resulting in a recovered cleaning solution and
D) using the recovered cleaning solution in a cleaning step of phase B).

## Description

### Field of the invention

The present invention relates to a method for membrane filtration of a product in a membrane plant and to a membrane plant for membrane filtration of a product.

### Background of the invention

Membrane filtration is an advantageous technology, which is applied in an industrial scale in membrane plants e.g. by the dairy industry, the food and beverage industry, the metal industry, the pharmaceutical industry or the water industry.

US 2005/0053707 A1 for example relates to a method and an apparatus for sequential separation of various nutritional components of milk, particularly sequential separation of various milk proteins, carbohydrates, enzymes, and minerals contained in milk, colostrum, whey, or other dairy products, using cross-flow filtration modules comprising filtration membranes. According to one embodiment, milk from a milk source is flowing through a first cross-filtration module to remove bacteria contained therein and through six further cross-filtration modules to capture and filter defined fractions of the milk.

The membrane separation technologies of microfiltration, ultrafiltration, nanofiltration and reverse osmosis possess characteristics that make them attractive as separation, sterilisation, recycle and recovery processes, including:
- continuous process, resulting in automatic and uninterrupted operation;
- low energy utilization involving neither phase nor temperature changes;
- modular design with no significant size limitations;
- minimum of moving parts, with low maintenance requirements;
- no effect on form or chemistry of the separated components;
- separation effected with no chemical additions required.

One of the major problems in the operation of membrane processes is membrane fouling. Membrane fouling is referred to the flux decline of a membrane filter caused by the accumulation of certain constituents of the filtered product on the surface of the membrane or in the membrane matrix. Certain fouling materials can be removed by hydraulic means such as filter backwash or scrubbing; most can be removed by chemical means such as cleaning-in-place (CIP) or chemical cleaning.

In the state of the art the cleaning solutions, which are used for chemical cleaning of membrane plants are disposed after the cleaning process. Because of environmental and economic concerns, it is desirable to recover at least part of the cleaning solutions and/or water within the cleaning solutions for reuse.

### Summary of the invention

The present invention is based on the object of providing a method for membrane filtration of a product in a membrane plant, including a cleaning procedure of the used membrane filtration system, which reduces the overall costs of the membrane filtration and which reduces the discharge of contaminated cleaning solutions into the environment.

This object is achieved by a method for membrane filtration of a product in a membrane plant, containing the phases
A) filtering the product with a first membrane system of the membrane plant,
B) cleaning the first membrane system by a multi-step cleaning procedure including at least one rinsing step with water and at least one cleaning step with a cleaning solution, resulting in at least one contaminated cleaning solution,
C) filtering the at least one contaminated cleaning solution with a second membrane system, resulting in a recovered cleaning solution and
D) using the recovered cleaning solution in a cleaning step of phase B).

In this context a membrane plant is an arrangement comprising at least one membrane system for membrane filtration of an industrial product, preferably with a membrane flux higher than 300 l/(h*m²).

The product filtered with the membrane system of the membrane plant according to the present invention in phase A) is preferably a dairy product, a pharmaceutical product, a food or brewing product or waste water.

The cleaning phase B) is an integral part of the membrane system operation that has a profound impact on the performance and economics of the membrane filtration process. Membrane fouling is generally categorized into four areas: Inorganic fouling, particles/colloids fouling, biological fouling and organic fouling. Whether the foulings are inorganic, particles/colloids, biological or organic, their presence on the membrane results in a decreased permeate flow or in an increased necessary feed pressure to maintain the same flow. The cleaning phase B) of the method according to the present invention should be initiated in predetermined regular time intervals or depending on the membrane system's performance decrease as a result of fouling. The cleaning phase B) is preferably implemented using standard cleaning-in-place (CIP) equipment and flow paths, all steps from chemical addition to circulation, soaking, draining and flushing being fully automated. The concept of CIP refers to cleaning procedures being applied without a disassembly of the device to be cleaned.

The cleaning phase B) comprises a multi-step cleaning procedure, the individual steps of which are depending on the kind and amount of existing fouling. The proper combination e.g. of pre-rinse, cleaning and post-rinse steps in the multi-step cleaning procedure is important.

Once the cause of membrane fouling is identified, various cleaning solutions can be used for the at least one cleaning step to remove fouling materials from the membrane and restore the membrane flux of the first membrane system. The chemical compatibility of the membrane and of other components of the membrane plant limits the types and the maximum allowable concentrations of the cleaning solutions used in phase B) of the method according to the present invention. Furthermore, factors like temperature, length of cleaning period and hydrodynamic conditions all affect the cleaning efficiency of the multi-step cleaning procedure.

The at least one rinsing step with water and the at least one cleaning step with a cleaning solution in phase B) of the method according to the invention can be carried out by soaking, forward flushing or backward flushing the membrane with water or cleaning solution or by a combination thereof. During a soaking process, the membranes of the first membrane system are soaked with water or with a cleaning solution for a predetermined period of time. When forward flushing is applied, the membranes of the first membrane system are flushed with water or a cleaning solution forward, the water or cleaning solution flowing through the system more rapidly than during the filtration phase A). Because of the rapid flow and resulting turbulence, absorbed particles are released and discharged from the membrane. Backward flushing is a reversed filtration process. A liquid (e.g. water, permeate or cleaning solution) is flushed backwards through the membrane under pressure, the pores of the membrane being flushed inside out.

Each step, a plurality of steps or all of the steps of the multi-step cleaning procedure of phase B) result(s) in a contaminated cleaning solution containing a cleaning solution, water and contaminants. In phase C) of the method according to the present invention this at least one contaminated cleaning solution stream is filtered with a second membrane system, resulting in a recovered cleaning solution stream. By this filtering step at least a part of the cleaning solution and/or water of the contaminated cleaning solution stream is recovered for reuse without the addition of chemicals, with a relatively low energy use and well-arranged process conditions. The reuse of the recovered cleaning solution in phase D) of the method according to the present invention helps to avoid damage to the environment by discharged chemicals or by water wastage. Furthermore, the method for membrane filtration of a product in a membrane plant becomes more cost-effective by saving cleaning solutions and/or water.

According to a preferred embodiment of the present invention the first membrane system and the second membrane system each contain at least one membrane selected from the group of microfiltration (MF), ultrafiltration (UF), nanofiltration (NF) or reverse osmosis (RO) membranes. The membranes are preferably cellulose-based, polymer-based or ceramic-based membranes.

Microfiltration is a low-pressure membrane process for separating colloidal or suspended particles, bacteria or fat globules in the range of 0.05 to 10 µm. Microfiltration can be used e.g. for fermentation, broth clarification and biomass clarification and recovery.

Ultrafiltration is a selective fractionation process using pressures up to 10 bar. Ultrafiltration is widely used in the fractionation of milk and whey and in protein fractionation. It concentrates suspended solids and solutes of a molecular weight greater than 1000. The permeate contains low-molecular weight organic solutes and salts.

Nanofiltration can perform separation applications such as demineralization, colour removal and desalination. Nanofiltration allows small ions to pass through the membrane, while excluding larger ions and most organic components. It can be considered a loose reverse osmosis.

Reverse osmosis is a high-efficient technique for dewatering process streams, concentrating/separating low-molecular-weight substances in solutions or cleaning waste water. Certain polymer membranes used for reverse osmosis reject over 99 % of all ionic solids.

These four separation technologies are usually defined on the basis of pore size or on their removal function. According to a preferred embodiment of the present invention at least one of the first and second membrane systems is a tubular membrane system. Tubular membrane systems can be divided into systems with tubular, capillary or hollow fibre membranes. A tubular membrane system contains a plurality of such tubular, capillary or hollow fibre membranes.

Tubular membranes are tubes having a diameter of about 5 to 15 mm. A plurality of such tubular membranes is usually placed in a cylindrical supporting shell, since the membranes are not self-supporting. The flow in a tubular membrane is usually inside out.

Capillary membranes have a diameter, which is smaller than that of tubular membranes, namely 0.5 to 5 mm. A plurality of capillary membranes is bundled for application. The capillary membranes are sufficiently strong to resist filtration pressures. The flow through the capillary membranes can be both inside out or outside in.

Hollow fibre membranes are membranes with a diameter of below 0.1 µm. In a membrane system with hollow fibre membranes thousands of hollow straw-like fibres are grouped into a bundle. During operation, a filtrate (e.g. water) is passed through the fibre walls under pressure or in a vacuum and retentate is retained by the fibre walls. The hollow fibre membranes can only be used for treatment of water with a low suspended solids content.

According to a preferred embodiment of the present invention, the at least one cleaning step in phase B) is carried out with a cleaning solution having an overall volume in a range between 3000 1 and 10000 1, more preferable between 4000 and 9000 1. This volume of cleaning solution can be provided in a holding tank, which is connectable to the first membrane system.

In a preferred embodiment of the present invention the at least one cleaning step in phase B) is carried out with the cleaning solution containing a caustic, a sequestrant and a surfactant or an acid and a surfactant.

Caustic is typically used to clean membranes fouled by organic or a microbial fouling. The function of caustic is two-fold: hydrolysis and solubilization. Organic materials including polysaccharides and proteins are hydrolyzed by caustic. A sequestrant can bind free calcium in the cleaning solution to prevent calcification and fatty acid soap formation.

Acids are primarily used for removing scales and metal dioxides from fouling layers. By way of example, citric acid is effective for cleaning a membrane, which is fouled by iron oxides, because it not only dissolves iron oxide precipitates but also forms complex with iron.

Surfactants have both hydrophilic and hydrophobic structures. Surfactants can form micelles with fat, oil and proteins in water. They can help to clean membranes fouled by these materials. Some surfactants can disrupt functions of bacteria cell walls and some can interfere hydrophobic interactions between bacteria and membranes. Surfactants thus effect fouling dominated by formation of biofilms. The surfactants used in the cleaning solutions in phase B) of the present invention can be anionic and/or amphoteric.

Furthermore, the cleaning solutions can contain oxidants like sodium hypochlorite or hydrogen peroxide to oxidize and solubilize organic deposit, the cleaning solutions preferably having temperatures higher than 60°C.

Preferably, the at least one cleaning step in phase B) is carried out with a cleaning solution containing at least one component selected from the group of sodium hydroxide, potassium hydroxide, sodium hypochlorite, phosphoric acid, nitric acid, a complexing agent like ethylene diamine tetraacetic acid or a derivative thereof, nitrilotriacetic acid or a derivative thereof, potassium triphosphate and a sequestrant like a phosphonate or an acrylate.

The membrane systems used for the present invention can be managed in dead-end flow, in cross-flow or alternately in dead-end flow and cross-flow.

Dead-end filtration takes place with all the liquid to be filtered that enters the membrane system being pressed through the membrane. Some solids and components of the liquid will stay behind on the membrane, depending on the pore size of the membrane.

When cross-flow filtration takes place, the liquid to be filtered is flowed in a tangential flow fashion across the surface of the membrane. A part of the liquid with selected components permeates through the membrane forming a permeate. The rest of the liquid and its components are retained by the membrane forming a retentate.

According to a preferred embodiment of the present invention, during phase C) of the method for membrane filtration, the second membrane system is managed in dead-end flow until accumulated soil reduces system performance by 5 to 30 % and is then managed in cross-flow to flush the accumulated soil out of the second membrane system. Such a dead-end filtration forcing 100 % of the water through the membrane with occasional periods of the cross-flow feature allow to reduce the concentration of contaminants on the surface of the membrane. A decrease of performance by 5 to 30 % in this context means either 5 to 30 % reduction in permeate flow at unchanged pressures or a 5 to 30 % increase in feed pressure to maintain the same flows.

In a preferred embodiment of the present invention a third membrane system filters the contaminated cleaning solution in phase C) alternatively or alternately to the second membrane system. This third membrane system can serve as a standby or backup system, which is only used in the case of failure of the second membrane system, e.g. because of a plugging of its membranes. The third membrane system can also serve as an alternative membrane system, which continues the filtering of the contaminated cleaning solution e.g. while the second membrane system is cleaned or flushed. One possibility is, that the third membrane system filters the contaminated cleaning solution in phase C), being managed in dead-end flow, while the second membrane system is managed in cross-flow to flush accumulated soil out of the second membrane system and that the third membrane system is managed in cross-flow to flush accumulated soil out of the third membrane system, while the second membrane system is managed in dead-end flow.

The recovered cleaning solution leaving the second and/or third membrane system is preferably mixed with a cleaning solution and/or water before it is used again in the cleaning step of phase B). By adding cleaning solution and/or water to the recovered cleaning solution, the original concentration of the cleaning solution used for cleaning the first membrane system is set before it is reused.

According to one embodiment of the invention, the multi-step cleaning procedure of phase B) comprises the steps
i) rinsing the first membrane system with water,
ii) cleaning the first membrane system with a first cleaning solution containing caustic,
iii) rinsing the first membrane system with water,
iv) cleaning the first membrane system with a second cleaning solution containing an acid,
v) rinsing the first membrane system with water,
vi) cleaning the first membrane system with a third cleaning solution containing caustic and
vii) rinsing the first membrane system with water.

In step vi) caustic opens the pores of the membrane for its next filtration application, the pores being closed by the acid of step iv). The third cleaning solution used in step vi) can be a different or the same cleaning solution as used in step ii).

The present invention further refers to a membrane plant for membrane filtration of a product, comprising a first membrane system for filtering the product, at least one holding tank filled with a cleaning solution, the holding tank being connectable to the first membrane system via a cleaning solution line, at least one collection tank for collecting a contaminated cleaning solution, which exits the first membrane system via a collection line, the collection tank being connected to at least one further membrane system for filtering the contaminated cleaning solution, the at least one further membrane system being connected to a return line, which is connected to the holding tank for returning a recovered cleaning solution from the at least one further membrane system to the holding tank. The method according to the present invention can be carried out in such a membrane plant.

The present invention is explained in greater detail below with reference to the drawing.

### Description of the figure

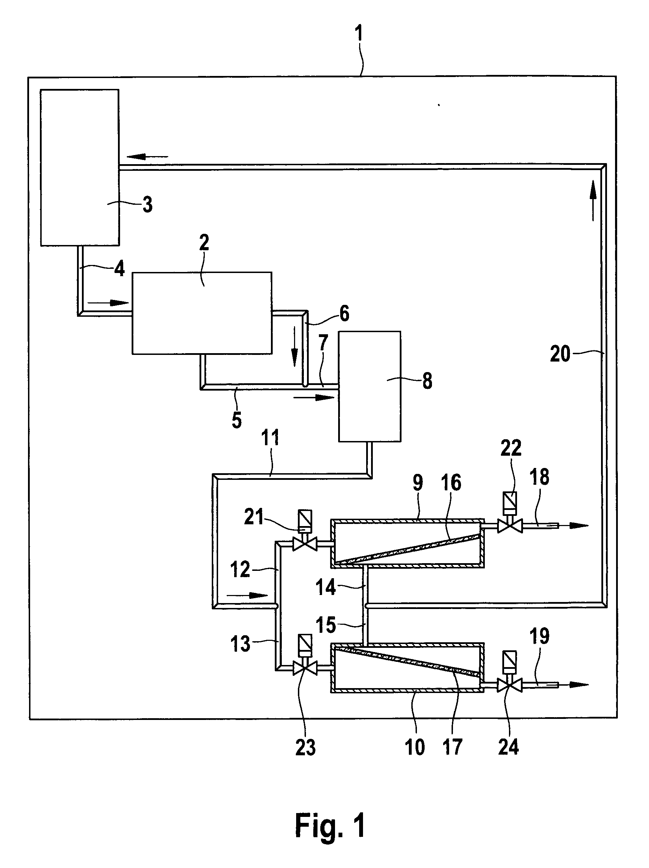

Figure 1 shows a flow diagram presenting schematically the sequence of actions in a method according to the present invention, which is carried out in a membrane plant according to the present invention.

The membrane plant 1 comprises a first membrane system 2 for filtering a product, e.g. a dairy product, in phase A) of the method according to the present invention. A holding tank 3 is filled with a few thousands of litres of a cleaning solution. This holding tank 3 is connectable to the first membrane system 2 via a cleaning solution line 4 to carry out the cleaning phase B) of the method according to the present invention. When the holding tank 3 is connected to the first membrane system 2 via the cleaning solution line 4, as shown in figure 1, the filtering of the product is stopped and the first membrane system 2 is cleaned by a multi-step cleaning procedure, one cleaning step of which includes the cleaning solution flowing from the holding tank 3 through the first membrane system 2. From the first membrane system 2 two streams emerge, a permeate-stream 5 and a retentate stream 6, when the first membrane system is arranged for cross-flow filtration. Both streams 5, 6 contain a contaminated cleaning solution during cleaning phase B) of the method according to the present invention. The streams 5, 6 are merged to a common collection line 7, which leads the contaminated cleaning solution to a collection tank 8, where it is collected. This contaminated cleaning solution is not discharged, but it is filtered by two further membrane systems 9, 10. The collection tank 8 is connected to these membrane systems 9, 10 via a transport line 11, which splits up into two parallel lines 12, 13, which are connected to one of the two membrane systems 9, 10 each. The two membrane systems 9, 10 contain microfiltration, ultrafiltration, nanofiltration or reverse osmosis membranes 16, 17. The liquid, which enters one of the two membrane systems 9, 10 via one of the two parallel lines 12, 13 can exit the membrane systems 9, 10 via a permeate line 14, 15 or a retentate line 18, 19. The two permeate lines 14, 15 of the membrane systems 9, 10 merge into a common return line 20, which is connected to the holding tank 3 for returning a recovered cleaning solution and/or water from the membrane systems 9, 10 to the holding tank 3, where it is stored for the next cleaning step of the first membrane system 2. Since not the whole volume of cleaning solution will be recycled by the filtration step in the two membrane systems 9, 10, the recovered cleaning solution is mixed with a cleaning solution and/or water to top up the holding tank 3.

The second and third membrane systems 9, 10 are used alternatively or alternately to filter the contaminated cleaning solution coming from the collection tank 8. They can be managed in dead-end flow, in cross-flow or alternately in dead-end flow and cross-flow each. For this flow management, a first inlet valve 21 and a first outlet valve 22 of the second membrane system 9 and a second inlet valve 23 and a second outlet valve 24 of the third membrane system 10 can be opened or closed.

One possible application of the second and third membrane system 9, 10 according to the present invention is as follows. The first inlet valve 21 is open, the second inlet valve 23 and the first and second outlet valve 22, 24 are closed. Therefore, the second membrane system 9 carries out a dead-end filtration of the contaminated cleaning solution coming through the transport line 11 from the collection tank 8. The filtered liquid (recovered cleaning solution/water) passes through the first permeate line 14 and to the return line 20, leaving an amount of soil behind. When a certain amount of soil has accumulated on the first membrane 16 the second membrane system 9 needs to be flushed to restore its system performance, which is reduced by the soil blocking its membrane 16. Therefore the first outlet valve 22 is opened resulting in a cross-flow in the second membrane system 9, which flushes the soil from its membrane 16 into the first retentate line 18, from where it is discharged or recirculated to the collection tank 8. At the same time, a dead-end filtration can be carried out by the third membrane system 10, the inlet valve 23 of which is opened while its outlet valve 24 remains closed. The filtered liquid (recovered cleaning solution/water) then exits the third membrane system 10 via the second permeate line 15 and the return line 20. When a certain amount of soil has accumulated on the second membrane 17, the third membrane system 10 is flushed and the second membrane system 9 takes over the dead-end filtration again.

The membrane plant 1 according to the present invention preferably contains a plurality of holding tanks 3, each holding tank 3 containing a different cleaning solution and/or water. Each holding tank 3 contains enough cleaning solution and/or water for cleaning at least one first membrane system 2 in at least one cleaning step. The membrane plant 1 furthermore comprises at least one collection tank 8. If only one collection tank 8 is provided, it has to be emptied completely via the transport line 11, before it can collect the next (different kind of) contaminated cleaning solution coming from the first membrane system 2. The membrane plant 1 according to figure 1 includes two further membrane systems 9, 10 for filtering the contaminated cleaning solutions. In another embodiment of the present invention, the membrane plant includes only one or three or more further membrane systems for this filtering step.

### Reference Numbers

- 1: membrane plant
- 2: first membrane system
- 3: holding tank
- 4: cleaning solution line
- 5: permeate stream
- 6: retentate stream
- 7: collection line
- 8: collection tank
- 9: second membrane system
- 10: third membrane system
- 11: transport line
- 12: first line
- 13: second line
- 14: first permeate line
- 15: second permeate line
- 16: first membrane
- 17: second membrane
- 18: first retentate line
- 19: second retentate line
- 20: return line
- 21: first inlet valve
- 22: first outlet valve
- 23: second inlet valve
- 24: second outlet valve

## Claims

1. A method for membrane filtration of a product in a membrane plant (1), containing the phases.
A) filtering the product with a first membrane system (2) of the membrane plant (1),
B) cleaning the first membrane system (2) by a multi-step cleaning procedure including at least one rinsing step with water and at least one cleaning step with a cleaning solution, resulting in at least one contaminated cleaning solution,
C) filtering the at least one contaminated cleaning solution with a second membrane system (9), resulting in a recovered cleaning solution and
D) using the recovered cleaning solution in a cleaning step of phase B).

2. The method according to claim 1 wherein the first membrane system (2) and the second membrane system (9) each contain at least one membrane selected from the group of microfiltration (MF), ultrafiltration (UF), nanofiltration (NF) or reverse osmosis (RO) membranes.

3. The method according to one of claims 1 or 2, wherein at least one of the first and second membrane systems (2, 9) is a tubular membrane system.

4. The method according to any of claims 1 to 3, wherein the at least one cleaning step in phase B) is carried out with a cleaning solution having an overall volume in a range between 3000 litres and 10000 litres.

5. The method according to any of claims 1 to 4, wherein the at least one cleaning step in phase B) is carried out with a cleaning solution containing caustic, a sequestrant and a surfactant or an acid and a surfactant.

6. The method according to any of claims 1 to 5, wherein the at least one cleaning step in phase B) is carried out with a cleaning solution containing at least one component selected from the group of sodium hydroxide, potassium hydroxide, sodium hypochlorite, phosphoric acid, nitric acid, a complexing agent like ethylene diamine tetraacetic acid or a derivative thereof, nitrilotriacetic acid or a derivative thereof, potassium triphosphate and a sequestrant like a phosphonate or an acrylate.

7. The method according to any of claims 1 to 6, wherein the filtering in phase A) is carried out with a product selected from the group of dairy products, pharmaceutical products, food or brewing products and waste water.

8. The method according to any of claims 1 to 7, wherein the first and second membrane systems (2, 9) are managed in dead-end flow, in cross-flow or alternately in dead-end flow and cross-flow.

9. The method according to any of claims 1 to 8, wherein during phase C) the second membrane system is managed in dead-end flow until accumulated soil reduces system performance by 5 to 30 % and is then managed in cross-flow to flush the accumulated soil out of the second membrane system.

10. The method according to any of claims 1 to 9, wherein a third membrane system (10) filters the contaminated cleaning solution in phase C) alternatively or alternately to the second membrane system (9).

11. The method according to any of claims 1 to 10, wherein a third membrane system (10) filters the contaminated cleaning solution in phase C), being managed in dead-end flow, while the second membrane system (9) is managed in cross-flow to flush accumulated soil out of the second membrane system (9) and the third membrane system (10) being managed in cross-flow to flush accumulated soil out of the third membrane system (10), while the second membrane system (9) is managed in dead-end flow.

12. The method according to any of claims 1 to 11, wherein the recovered cleaning solution is mixed with cleaning solution and/or water before it is reused in a cleaning step of phase B).

13. The method according to any of claims 1 to 12, wherein the multi-step cleaning procedure of phase B) comprises the steps
i) rinsing the first membrane system (2) with water
ii) cleaning the first membrane system (2) with a first cleaning solution containing caustic,
iii) rinsing the first membrane system (2) with water,
iv) cleaning the first membrane system (2) with a second cleaning solution containing an acid,
v) rinsing the first cleaning system (2) with water,
vi) cleaning the first membrane system (2) with a third cleaning solution containing caustic and
vii) rinsing the first membrane system (2) with water.

14. Membrane plant (1) for membrane filtration of a product, comprising a first membrane system (2) for filtering the product, at least one holding tank (3) filled with a cleaning solution, the holding tank (3) being connectable to the first membrane system (2) via a cleaning solution line (4), at least one collection tank (8) for collecting a contaminated cleaning solution, which exits the first membrane system (2) via a collection line (7), the collection tank (8) being connected to at least one further membrane system (9, 10) for filtering the contaminated cleaning solution, the at least one further membrane system (9, 10) being connected to a return line (20), which is connected to the holding tank (3) for returning a recovered cleaning solution from the at least one further membrane system (9, 10) to the holding tank (3).
